(19) Europäisches Patentamt
European Patent Office
Office européen des brevets

(11) **EP 4 482 234 A1**

(12) **EUROPEAN PATENT APPLICATION**
published in accordance with Art. 153(4) EPC

(43) Date of publication:
**25.12.2024  Bulletin 2024/52**

(21) Application number: **22926481.7**

(22) Date of filing: **18.02.2022**

(51) International Patent Classification (IPC):
**H04W 72/04** $^{(2023.01)}$    **H04W 24/02** $^{(2009.01)}$

(52) Cooperative Patent Classification (CPC):
**H04W 24/02; H04W 72/04**

(86) International application number:
**PCT/CN2022/076886**

(87) International publication number:
**WO 2023/155153 (24.08.2023 Gazette 2023/34)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.
Beijing 100085 (CN)**

(72) Inventor: **ZHAO, Qun
Beijing 100085 (CN)**

(74) Representative: **Dehns Germany Partnerschaft
mbB
Theresienstraße 6-8
80333 München (DE)**

(54) **DATA TRANSMISSION METHOD AND APPARATUS, AND STORAGE MEDIUM**

(57)    The present disclosure provides a data transmission method and apparatus, and a storage medium. The data transmission method includes: receiving indication information transmitted by a base station, where the indication information is configured to configure types of CPs for different resources within a BWP, and the specified BWP is a BWP that needs to support a plurality of types of CPs at a same time; and based on the indication information, using the corresponding types of CPs on the different resources within the specified BWP, to transmit data with the base station. The present disclosure can avoid frequent BWP switching by the terminal, reduce scheduling restrictions on the network side, reduce data transmission latency, and improve system transmission performance.

FIG. 2

**Description**

**TECHNICAL FIELD**

The present disclosure relates to the technical field of communication, in particular to a data transmission method and apparatus, and a storage medium.

**BACKGROUND**

For service scenarios such as wide coverage, a relatively long cyclic prefix (CP) is required to scramble or descramble transmitted data to protect data. However, in a current 5G (5th Generation Mobile Communication Technology) New Radio (NR) system, only the 60 kHz (kilohertz) Sub-Carrier Spacing (SCS) supports an extended cyclic prefix (eCP). Further, based on a protocol convention, CP is configured according to Bandwith Part (BWP), that is, BWP can only use a pre-configured type of CP for data transmission.

When a multicast broadcast service (MBS) or other services require the use of extended CP for transmission, transmission can only be performed by 60 kHz BWP. At the same time, considering that the terminal needs to detect and receive broadcast Physical Downlink Control Channels (PDCCHs), broadcast Physical Downlink Shared Channels (PDSCHs), unicast PDCCHs, unicast PDSCHs, or Release-17 (Rel-17) MBS related channels on a BWP with a normal cyclic prefix (NCP), the terminal must switch between different BWPs, resulting in scheduling limitations and transmission latency. In addition, during BWP switching, the network side and the terminal side cannot transmit and receive data, which also causes transmission latency and reduces system performance.

**SUMMARY**

To overcome the problems in the related art, in embodiments of the present disclosure, a data transmission method and apparatus, and a storage medium are provided.

According to the first aspect of the embodiments of the present disclosure, a data transmission method is provided, where the method is performed by a terminal, and includes:

receiving indication information transmitted by a base station, where the indication information is configured to configure types of cyclic prefixes (CPs) for different resources within a specified bandwidth part (BWP), and the specified BWP is a BWP that needs to support a plurality of types of CPs at a same time; and
based on the indication information, using the corresponding types of CPs on the different resources within the specified BWP, to transmit data with the base station.

In some embodiments, the indication information is configured to configure types of CPs corresponding to one or more specific frequency domain resources within the specified BWP.

In some embodiments, the indication information is configured to configure a frequency domain resource range for using an extended cyclic prefix (eCP) within the specified BWP.

In some embodiments, the indication information includes at least one of:

an RB index of a starting resource block (RB) using the eCP within the specified BWP; or
a number of RBs using the eCP within the specified BWP; and
the based on the indication information, using the corresponding types of the CPs on the different resources within the specified BWP, to transmit data with the base station includes at least one of:

using the eCP on the number of consecutive RBs starting from the starting RB within the specified BWP, to transmit data with the base station; or
using a normal cyclic prefix (NCP) on other RBs within the specified BWP, to transmit data with the base station.

In some embodiments, the indication information is configured to configure an anchor RB corresponding to an eCP within the specified BWP.

In some embodiments, the indication information includes an RB index of the anchor RB;
the based on the indication information, using the corresponding types of the CPs on the different resources within the specified BWP, to transmit data with the base station includes at least one of:

using an eCP on RBs between a preset RB and the anchor RB within the specified BWP, to transmit data with the base station; or

using an NCP on other RBs within the specified BWP, to transmit data with the base station.

In some embodiments, the preset RB is a first RB or a last RB on the specified BWP.
In some embodiments, the indication information is configured to configure a plurality of common frequency resources (CFRs) using different types of CPs.
In some embodiments, the indication information includes at least one of:

CFR configuring information; or
CP type indication information corresponding to the plurality of CFRs; and
the based on the indication information, using the corresponding types of CPs on the different resources within the specified BWP, to transmit data with the base station includes:
using CPs indicated by CP type indication information on different CFRs of the specified BWP, to transmit data with the base station.

In some embodiments, the indication information is configured to configure types of CPs corresponding to different frequency domain resource granularities within the specified BWP.
In some embodiments, the indication information is bitmap information; and
the based on the indication information, using the corresponding types of the CPs on the different resources within the specified BWP, to transmit data with the base station includes at least one of:

using an eCP on a frequency domain resource granularity corresponding to a first bit value within the specified BWP, to transmit data with the base station; or
using an NCP on a frequency domain resource granularity corresponding to a second bit value within the specified BWP, to transmit data with the base station.

In some embodiments, each of the frequency domain resource granularities includes one or more RBs, where the RBs are continuous RBs or discrete RBs.
In some embodiments, the method further includes:

based on a protocol convention, determining one or more RBs in each of the frequency domain resource granularities; or
based on a specified signaling transmitted by the base station, determining one or more RBs in each of the frequency domain resource granularities.

In some embodiments, the indication information is configured to configure types of CPs corresponding to one or more specific time domain resources within the specified BWP, where a size of one or more specific time domain resources is measured in a unit of an orthogonal frequency division multiplexing (OFDM) symbol, a time slot, or a predefined time length.
In some embodiments, the indication information is bitmap information; and
the based on the indication information, using the corresponding types of the CPs on the different resources within the specified BWP, to transmit data with the base station includes at least one of:

using an eCP on a time domain resource corresponding to a first bit value within the specified BWP, to transmit data with the base station; or
using an NCP on a time domain resource corresponding to a second bit value within the specified BWP, to transmit data with the base station.

In some embodiments, the indication information includes:

a time domain resource index of a starting time domain resource using an eCP within the specified BWP; or
a number of time domain resources using an eCP within the specified BWP;
the based on the indication information, using the corresponding types of the CPs on the different resources within the specified BWP, to transmit data with the base station includes at least one of:

using the eCP on the number of consecutive time domain resources starting from the starting time domain resource within the specified BWP, to transmit data with the base station; or
using an NCP on other time domain resources within the specified BWP, to transmit data with the base station.

In some embodiments, when the size of the one or more specific time domain resources is in the unit of the time slot or the predefined time length, the indication information includes at least one of:

period information; or
CP type indication information corresponding to each of the one or more time domain resources within each period.

In some embodiments, the receiving the indication information transmitted by the base station includes:

receiving a radio resource control (RRC) signal including the indication information transmitted by the base station; or
receiving system information including the indication information transmitted by the base station; or
receiving a multicast broadcast service multicast control channel (MBS-MCCH) including the indication information transmitted by the base station.

In some embodiments, the indication information is configured based on each specified BWP, or the indication information is configured based on each cell.

According to the second aspect of the embodiments of the present disclosure, a data transmission method is provided. The method is performed by a base station, and includes:

transmitting indication information to a terminal, where the indication information is configured to configure types of cyclic prefixes (CPs) for different resources within a specified bandwidth part (BWP), and the specified BWP is a BWP that needs to support a plurality of types of CPs at a same time; and
based on the indication information, using the corresponding types of CPs on the different resources within the specified BWP, to transmit data with the terminal.

In some embodiments, the indication information is configured to configure types of CPs corresponding to one or more specific frequency domain resources within the specified BWP.

In some embodiments, the indication information is configured to configure a frequency domain resource range for using an extended cyclic prefix (eCP) within the specified BWP.

In some embodiments, the indication information includes at least one of:

an RB index of a starting resource block (RB) using the eCP within the specified BWP; or
a number of RBs using the eCP within the specified BWP; and
the based on the indication information, using the corresponding types of the CPs on the different resources within the specified BWP, to transmit data with the terminal includes at least one of:

using the eCP on the number of consecutive RBs starting from a starting RB within the specified BWP, to transmit data with the terminal; or
using a normal cyclic prefix (NCP) on other RBs within the specified BWP, to transmit data with the terminal.

In some embodiments, the indication information is configured to configure an anchor RB corresponding to an eCP within the specified BWP.

In some embodiments, the indication information includes an RB index of the anchor RB;
the based on the indication information, using the corresponding types of the CPs on the different resources within the specified BWP, to transmit data with the terminal includes at least one of:

using an eCP on RBs between a preset RB and the anchor RB within the specified BWP, to transmit data with the terminal; or
using an NCP on other RBs within the specified BWP, to transmit data with the terminal.

In some embodiments, the indication information is configured to configure a plurality of common frequency resources (CFRs) using different types of CPs.

In some embodiments, the indication information includes at least one of:

CFR configuring information; or
CP type indication information corresponding to the plurality of CFRs; and
the based on the indication information, using the corresponding types of CPs on the different resources within the specified BWP, to transmit data with the terminal includes:
using CPs indicated by CP type indication information on different CFRs of the specified BWP, to transmit data with the terminal.

In some embodiments, the indication information is configured to configure types of CPs corresponding to different frequency domain resource granularities within the specified BWP.

In some embodiments, the indication information is bitmap information; and
the based on the indication information, using the corresponding types of the CPs on the different resources within the specified BWP, to transmit data with the terminal includes at least one of:

> using an eCP on a frequency domain resource granularity corresponding to a first bit value within the specified BWP, to transmit data with the terminal; or
> using an NCP on a frequency domain resource granularity corresponding to a second bit value within the specified BWP, to transmit data with the terminal.

In some embodiments, each of the frequency domain resource granularities includes one or more RBs, where the RBs are continuous RBs or discrete RBs.

In some embodiments, the method further includes:
transmitting specified signaling to the terminal for configuring an RB contained in each of the frequency domain resource granularities.

In some embodiments, the indication information is configured to configure types of CPs corresponding to one or more specific time domain resources within the specified BWP, where a size of one or more specific time domain resources is measured in a unit of an orthogonal frequency division multiplexing (OFDM) symbol, a time slot, or a predefined time length.

In some embodiments, the indication information is bitmap information; and
the based on the indication information, using the corresponding types of the CPs on the different resources within the specified BWP, to transmit data with the terminal includes at least one of:

> using an eCP on a time domain resource corresponding to a first bit value within the specified BWP, to transmit data with the terminal; or
> using an NCP on a time domain resource corresponding to a second bit value within the specified BWP, to transmit data with the terminal.

In some embodiments, the indication information includes at least one of:

> a time domain resource index of a starting time domain resource using an eCP within the specified BWP; or
> a number of time domain resources using an eCP within the specified BWP;
> the based on the indication information, using the corresponding types of the CPs on the different resources within the specified BWP, to transmit data with the terminal includes at least one of:

>> using the eCP on the number of consecutive time domain resources starting from a starting time domain resource within the specified BWP, to transmit data with the terminal; or
>> using an NCP on other time domain resources within the specified BWP, to transmit data with the terminal.

In some embodiments, the indication information includes at least one of:

> period information; or
> CP type indication information corresponding to each of the one or more time domain resources within each period.

In some embodiments, the transmitting the indication information to the terminal includes:

> transmitting a radio resource control (RRC) signal including the indication information to the terminal; or
> transmitting system information including the indication information to the terminal; or
> transmitting a multicast broadcast service multicast control channel (MBS-MCCH) including the indication information to the terminal.

In some embodiments, the indication information is configured based on each specified BWP, or the indication information is configured based on each cell.

According to the third aspect of the embodiments of the present disclosure, a data transmission apparatus is provided. The apparatus is applied to a terminal, and includes:

a receiving module, configured to receive indication information transmitted by a base station, where the indication information is configured to configure types of cyclic prefixes (CPs) for different resources within a specified bandwidth part (BWP), and the specified BWP is a BWP that needs to support a plurality of types of CPs at a same time; and
a first data transmitting module, configured to, based on the indication information, use the corresponding types of CPs on the different resources within the specified BWP, to transmit data with the base station.

According to the fourth aspect of the embodiments of the present disclosure, a data transmission apparatus is provided. The apparatus is applied to a base station, and includes:

a transmitting module, configured to transmit indication information to a terminal, where the indication information is configured to configure types of cyclic prefixes (CPs) for different resources within a specified bandwidth part (BWP), and the specified BWP is a BWP that needs to support a plurality of types of CPs at a same time; and
a second data transmitting module, configured to, based on the indication information, use the corresponding types of CPs on the different resources within the specified BWP, to transmit data with the terminal.

According to the fifth aspect of the embodiments of the present disclosure, a computer-readable storage medium is provided, storing a computer program, where the computer program is configured to execute the data transmission method at the terminal side according to the any one described above.

According to the sixth aspect of the embodiments of the present disclosure, a computer-readable storage medium is provided, storing a computer program, where the computer program is configured to execute the data transmission method at the base station side according to the any one described above.

According to the seventh aspect of the embodiments of the present disclosure, a data transmission device is provided, and includes:

one or more processors; and
one or more memories storing instructions executable by the one or more processors;
where the one or more processors are configured to perform any one of the above data transmission methods at the terminal side.

According to the eighth aspect of the embodiments of the present disclosure, a data transmission device is provided, and includes:

one or more processors; and
one or more memories storing instructions executable by the one or more processors;
where the one or more processors are configured to perform any one of the above data transmission methods at the base station side.

The technical solutions provided by the embodiments of the present disclosure can include following beneficial effects.

In the present disclosure, the base station can configure the types of CPs corresponding to different resources within the specified BWP, where the specified BWP is a BWP that needs to support multiple types of CPs at the same time, The terminal side can use multiple types of CPs for data transmission on the same BWP, avoiding frequent BWP switching by the terminal, reducing scheduling restrictions on the network side, reducing data transmission latency, and improving system transmission performance.

It is to be understood that the above general descriptions and the below detailed descriptions are merely exemplary and explanatory, and are not intended to limit the present disclosure.

## BRIEF DESCRIPTION OF DRAWINGS

The accompanying drawings, which are incorporated in and constitute a part of this specification, illustrate examples consistent with the present disclosure and, together with the description, serve to explain the principles of the present disclosure.

FIG. 1 is a schematic diagram of using different types of CPs on different BWPs according to an embodiment.
FIG. 2 is a flowchart of a data transmission method according to an embodiment.
FIG. 3 is a flowchart of another data transmission method according to an embodiment.
FIG. 4 is a flowchart of another data transmission method according to an embodiment.
FIG. 5 is a flowchart of another data transmission method according to an embodiment.

FIG. 6 is a flowchart of another data transmission method according to an embodiment.

FIG. 7 is a flowchart of another data transmission method according to an embodiment.

FIG. 8 is a flowchart of another data transmission method according to an embodiment.

FIG. 9 is a flowchart of another data transmission method according to an embodiment.

FIG. 10 is a schematic diagram of using multiple types of CPs on the same BWP according to an embodiment.

FIGs. 11A to 11B are schematic diagrams of the using multiple types of CPs on the same BWP according to an embodiment.

FIG. 12 is a schematic diagram of using multiple types of CPs on the same BWP according to an embodiment.

FIG. 13 is a schematic diagram of using multiple types of CPs on the same BWP according to an embodiment.

FIGs. 14A to 14B are schematic diagrams of the using multiple types of CPs on the same BWP according to an embodiment.

FIGs. 15A to 15B are schematic diagrams of the using multiple types of CPs on the same BWP according to an embodiment.

FIG. 16 is a block diagram of a data transmission apparatus according to an embodiment.

FIG. 17 is a block diagram of another data transmission apparatus according to an embodiment.

FIG. 18 is a schematic structural diagram of a data transmission device according to an embodiment.

FIG. 19 is a schematic structural diagram of another data transmission device according to an embodiment.

## DETAILED DESCRIPTION

Embodiments will be described in detail here with the examples thereof expressed in the drawings. When the following descriptions involve the drawings, like numerals in different drawings represent like or similar elements unless stated otherwise. Implementations described in the following embodiments do not represent all implementations consistent with the present disclosure. On the contrary, they are examples of an apparatus and a method consistent with some aspects of the present disclosure described in detail in the appended claims.

The term used in the present disclosure is for the purpose of describing particular embodiments only and is not intended to limit the present disclosure. As used in the present disclosure and the appended claims, the singular forms "a", "an" and "the" are intended to include the plural forms as well, unless the context clearly indicates otherwise. It should further be understood that the term "and/or" as used herein refers to and includes any and all possible combinations of at least one of the associated listed items.

It should be understood that although the terms first, second, third, etc. may be used in the present disclosure to describe various information, such information should not be limited to these terms. These terms are only used to distinguish the same type of information from each other. For example, without departing from the scope of the present disclosure, the first information may also be referred to as the second information, and similarly, the second information may also be referred to as the first information. Depending on the context, the word "if' as used herein can be interpreted as "upon", "when" or "in response to determining".

At present, in the protocol conventions, only when the SCS is 60 kHz, an eCP can be supported. When SCS is other values, only NCP is supported.

Referring to Table 1, Table 1 shows the number of OFDM (Orthogonal Frequency Division Multiplexing) symbols per slot for a normal cyclic prefix, the number of slots per frame for a normal cyclic prefix, and the number of slots per subframe for a normal cyclic prefix.

Table 1

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Referring to Table 2, Table 2 shows the number of OFDM symbols per slot for an extended cyclic prefix, the number of slots per frame for an extended cyclic prefix, and the number of slots per subframe for an extended cyclic prefix.

Table 2

| μ | $N_{symb}^{slot}$ | $N_{slot}^{frame,\mu}$ | $N_{slot}^{subframe,\mu}$ |
|---|---|---|---|
| 2 | 12 | 40 | 4 |

In addition, the current protocol further agrees on that each BWP can only be configured with one CP, and the configuration signaling is as follows:

BWP information element

-- ASN1START

-- TAG-BWP-START


BWP ::=                           SEQUENCE {

    locationAndBandwidth              INTEGER (0..37949),

    subcarrierSpacing                 SubcarrierSpacing,

    cyclicPrefix                      ENUMERATED { extended }

OPTIONAL       -- Need R

    }


-- TAG-BWP-STOP

-- ASN1STOP

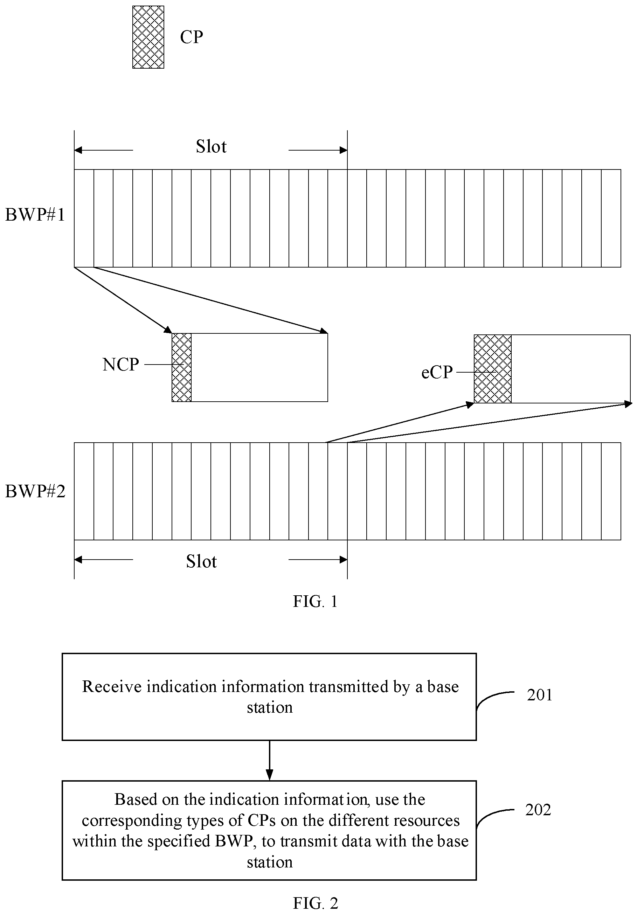

For terminals, a wide coverage service scenario requires configuring eCP to support a larger coverage radius. If the terminal needs to receive both wide area coverage type services and traditional type services at the same time, the terminal needs to switch between different BWPs. For example, as shown in FIG. 1, BWP #1 supports NCP and BWP #2 supports eCP. During the BWP switching period, the network side and terminal side are unable to transmit and receive data, resulting in transmission latency and reduced system performance.

Considering that in a future mobile communication system, the terminal needs to support both NCP and eCP at the same time, the present disclosure provides the following data transmission method, which can effectively avoid the problem of system performance degradation caused by frequent BWP switching of the terminal.

The data transmission method provided in the present disclosure is introduced first from the terminal side.

The embodiments of the present disclosure provide a data transmission method, as shown in FIG. 2. FIG. 2 is a flowchart of a data transmission method according to an embodiment. The method can be performed by a terminal. The method may include the following steps 201 to 202.

In step 201, indication information transmitted by a base station is received.

In the embodiments of the present disclosure, the indication information is configured to configure the types of CPs corresponding to different resources within a specified BWP. The specified BWP can be a BWP that needs to support multiple types of CPs at the same time.

In an embodiment, multiple types of CPs include but are not limited to NCP and eCP, which is not limited in the present disclosure.

In an embodiment, the terminal side can determine that a BWP belongs to a specified BWP based on the following reasons:

the terminal needs to transmit and receive a wide coverage service (such as a Rel-18 MBS) on the BWP, such that an eCP is required for reception; at the same time, the terminal needs to transmit and receive a legacy (traditional) type service (such as Rel-15/16/17 service) on the BWP, where the legacy (traditional) type service uses NCP for transmitting and receiving; and at the same time, the terminal needs to receive Rel-15/16/17 broadcast PDCCHs and PDSCHs on the BWP, where the broadcast channel performs transmission through NCP.

In step 202, based on the indication information, the corresponding types of CPs are used on the different resources within the specified BWP, to transmit data with the base station.

In the above embodiments, the terminal side can use multiple types of CPs for data transmission on the same BWP without the need for BWP switching, avoiding frequent BWP switching by the terminal, reducing scheduling restrictions on the network side, reducing data transmission latency, and improving system transmission performance.

In some embodiments, the indication information transmitted by the base station can be used to configure the CP type(s) corresponding to one or more specific frequency domain resources within the specified BWP. That is, a type of a CP is determined based on frequency division multiplexing (FDM) within the specified BWP. In an embodiment, the indication information is configured to configure a frequency domain resource range for using an extended cyclic prefix (eCP) within the specified BWP.

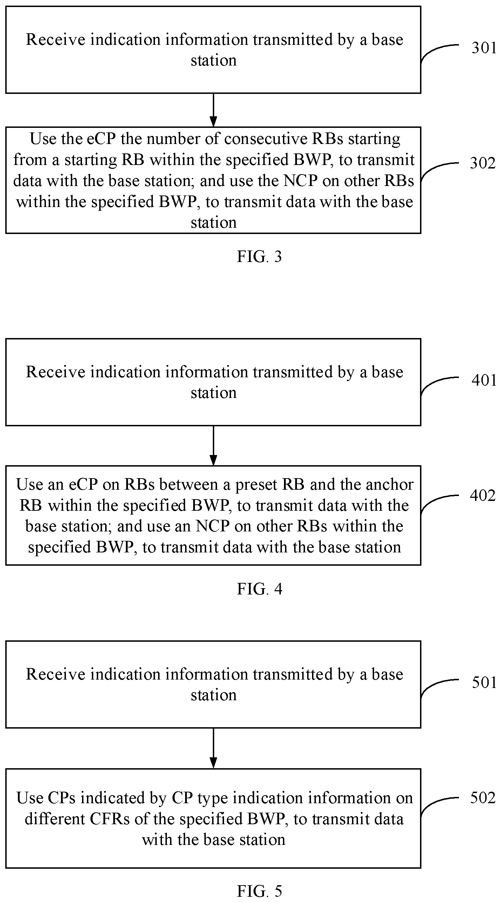

As shown in FIG. 3, FIG. 3 is a flowchart of a data transmission method according to an embodiment. The method can be performed by a terminal. The method may include the following steps 301 to 302.

At step 301, indication information transmitted by a base station is received.

In the embodiments of the present disclosure, the indication information can be configured using Start Indication Length Value (SILV) to specify the frequency domain resource range for using the extended cyclic prefix (eCP) within the BWP.

Specifically, the indication information may include but is not limited to at least one of: the Resource Block (RB) index of the starting Resource Block (RB) using the eCP within the specified BWP; or the number of RBs using eCP within the specified BWP.

In step 302, the eCP is used on RBs of the number of consecutive RBs starting from a starting RB within the specified BWP, to transmit data with the base station; and a normal cyclic prefix (NCP) is used on other RBs within the specified BWP, to transmit data with the base station.

In the above embodiments, SILV can be used to configure at least one of the RB index of the starting RB using eCP within a specified BWP, or the number of RBs using eCP within a specified BWP. Thereby the frequency domain range for data transmission using eCP within the specified BWP is determined, and other RBs belong to a frequency domain range for data transmission using NCP. It is achieved that multiple types of CPs for data transmission on the same BWP can be used, avoiding frequent BWP switching by the terminal, reducing scheduling restrictions on the network side, reducing data transmission latency, and improving system transmission performance.

In an embodiment, the indication information can be used to configure an anchor RB corresponding to the eCP within a specified BWP.

As shown in FIG. 4, FIG. 4 is a flowchart of a data transmission method according to an embodiment. The method can be performed by a terminal. The method may include the following steps 401 to 402.

In step 401, indication information transmitted by a base station is received.

In the embodiments of the present disclosure, the indication information may include the RB index of the anchor RB.

In step 402, an eCP is used on RBs between a preset RB and the anchor RB within the specified BWP, to transmit data with the base station; and an NCP is used on other RBs within the specified BWP, to transmit data with the base station.

In the embodiments of the present disclosure, the preset RB may be one of the Rbs within the specified BWPs pre-agreed upon by a protocol, or the preset RB may be one of RBs within the specified BWPs configured by the base station through signaling (or signals) or other means. In some embodiments, the preset RB can be the first RB or the last RB on the specified BWP.

The terminal determines the RBs between the preset RB and the anchor RB as the frequency domain range for data transmission using the eCP, and determines other RBs as the frequency domain range for NCP.

In the above embodiment, it is also achieved that multiple types of CPs for data transmission on the same BWP can be used, avoiding frequent BWP switching by the terminal, reducing scheduling restrictions on the network side, reducing data transmission latency, and improving system transmission performance.

In an embodiment, the indication information can be used to configure multiple Common Frequency Resources (CFRs) using different types of CPs.

As shown in FIG. 5, FIG. 5 is a flowchart of a data transmission method according to an embodiment. The method can be performed by a terminal. The method may include the following steps 501 to 502.

In step 501, indication information transmitted by a base station is received.

In the embodiments of the present disclosure, the indication information may include but is not limited to at least one of the following: CFR configuring information; or CP type indication information corresponding to the CFRs.

It should be noted that in the embodiments of the present disclosure, CFR can be used for transmission in multicast or broadcast related channels, such as for transmitting MBS services. The present disclosure does not limit the configuration of CFR.

In step 502, CPs indicated by CP type indication information are used on different CFRs of the specified BWP, to transmit data with the base station.

For example, the base station configures CFR #1 and CFR #2 through the indication information, and the corresponding CP type indication information respectively indicates eCP and NCP, then the terminal uses eCP on CFR #1 within the specified BWP to transmit data with the base station, and uses NCP on CFR #2 within the specified BWP to transmit data with the base station.

In the above embodiment, it is achieved that multiple types of CPs for data transmission on the same BWP can be used, avoiding frequent BWP switching by the terminal, reducing scheduling restrictions on the network side, reducing data transmission latency, and improving system transmission performance.

In another embodiment, the indication information can be configured to configure types of CPs corresponding to different frequency domain resource granularities within the specified BWP.

It should be noted that the terminal can determine the RB(s) contained in each frequency domain resource granularity based on the protocol agreement, or the terminal can determine the RB(s) contained in each frequency domain resource granularity based on specified signaling transmitted by the base station.

The specified signaling can include but is not limited to RRC (Radio Resource Control) signals, system information, or multicast broadcast service multicast control channel (MBS-MCCH), etc. The system information can be SIB1 or SIBx, which is not limited in the present disclosure.

The specified signaling can directly indicate the RB(s) contained in each frequency domain resource granularity in an explicit manner. Alternatively, the specified signaling can implicitly indicate the RBs contained in each frequency domain resource granularity, which is not limited in the present disclosure.

Furthermore, each of the frequency domain resource granularities includes RBs, where the RBs are continuous RBs or discrete RBs.

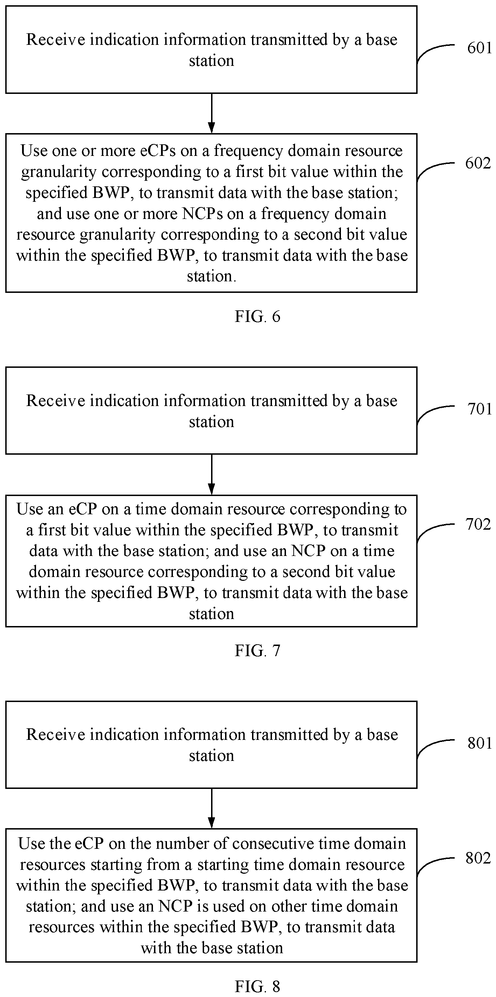

As shown in FIG. 6, FIG. 6 is a flowchart of a data transmission method according to an embodiment. The method can be performed by a terminal. The method may include the following steps 601 to 602.

In step 601, indication information transmitted by a base station is received.

In the embodiments of the present disclosure, the indication information may be bitmap information. The bitmap information can be configured based on BWP level or CFR level. That is, the base station configures the corresponding bitmap information for each specified BWP, or the base station configures the corresponding bitmap information for each CFR within each specified BWP, which is not limited in the present disclosure.

In step 602, one or more eCPs are used on a frequency domain resource granularity corresponding to a first bit value within the specified BWP, to transmit data with the base station; and one or more NCPs are used on a frequency domain resource granularity corresponding to a second bit value within the specified BWP, to transmit data with the base station.

In the embodiments of the present disclosure, the first bit value may be 1, and correspondingly, the second bit value may be 0. Alternatively, the first bit value may be 0, and the second bit value may be 1.

For example, if the indication information is 1001, the first bit value is 1, and the second bit value is 0, the terminal can use eCP on the first and fourth frequency domain resource granularities of the specified BWP to transmit data with the base station, and use NCP on the second and third frequency domain resource granularities to transmit data with the base station.

In the above embodiment, it is achieved that multiple types of CPs for data transmission on the same BWP can be used, avoiding frequent BWP switching by the terminal, reducing scheduling restrictions on the network side, reducing data transmission latency, and improving system transmission performance.

It should be noted that in the above embodiments, the eCP can also be replaced with NCP, and the method of data transmission between the terminal and the base station based on the indication information is similar to the specific process of the above embodiments, and will not be repeated here.

In some embodiments, the indication information is configured to configure types of CPs corresponding to one or more specific time domain resources within the specified BWP. That is, a type of a CP is determined based on time division multiplexing (TDM) within the specified BWP.

In an embodiment, specifically, a size of one or more specific time domain resources is measured in a unit of an orthogonal frequency division multiplexing (OFDM) symbol, a time slot, or a predefined time length.

The predefined time length can be configured by the base station or agreed upon by the protocol, which is not limited in the present disclosure.

As shown in FIG. 7, FIG. 7 is a flowchart of a data transmission method according to an embodiment. The method can be performed by a terminal. The method may include the following steps 701 to 702.

In step 701, indication information transmitted by a base station is received.

In the embodiments of the present disclosure, the indication information may be bitmap information. The bitmap information can be configured based on each time domain resource.

In step 702, an eCP is used on a time domain resource corresponding to a first bit value within the specified BWP, to transmit data with the base station; and an NCP is used on a time domain resource corresponding to a second bit value within the specified BWP, to transmit data with the base station.

In the embodiments of the present disclosure, the first bit value may be 1, and correspondingly, the second bit value may be 0. Alternatively, the first bit value may be 0, and the second bit value may be 1.

For example, if the indication information is 1001, the first bit value is 1, and the second bit value is 0, the terminal can use eCP on the first and fourth time domain resources of the specified BWP to transmit data with the base station, and use NCP on the second and third time domain resources to transmit data with the base station. A size of the time domain resource is in a unit of an OFDM symbol, a time slot, or a predefined time length, which is not limited in the present disclosure.

In the above embodiment, it is achieved that multiple types of CPs for data transmission on the same BWP can be used, avoiding frequent BWP switching by the terminal, reducing scheduling restrictions on the network side, reducing data transmission latency, and improving system transmission performance.

In another embodiment, the indication information can be configured using SILV.

As shown in FIG. 8, FIG. 8 is a flowchart of a data transmission method according to an embodiment. The method can be performed by a terminal. The method may include the following steps 801 to 802.

In step 801, indication information transmitted by a base station is received.

In the embodiments of the present disclosure, the indication information may include but is not limited to at least one of: a time domain resource index of a starting time domain resource using an eCP within the specified BWP; or a number of time domain resources using an eCP within the specified BWP.

In step 802, the eCP is used on time domain resources of the number of consecutive time domain resources starting from a starting time domain resource within the specified BWP, to transmit data with the base station; and an NCP is used on other time domain resources within the specified BWP, to transmit data with the base station.

In the embodiments of the present disclosure, the size of the time domain resource is measured in a unit of an OFDM symbol, a time slot, or a predefined time length.

In the above embodiment, it is achieved that multiple types of CPs for data transmission on the same BWP can be used, avoiding frequent BWP switching by the terminal, reducing scheduling restrictions on the network side, reducing data transmission latency, and improving system transmission performance.

In another embodiment, when the size of the one or more specific time domain resources is measured in the unit of the time slot or the predefined time length, the indication information includes at least one of: period information; or CP type indication information corresponding to each of the one or more time domain resources within each period.

The terminal can periodically determine the CP indicated by the CP type indication information on each time domain resource based on the indication information, and then transmit data with the base station based on the CP.

In the above embodiment, it is also achieved that multiple types of CPs for data transmission on the same BWP can be used, avoiding frequent BWP switching by the terminal, reducing scheduling restrictions on the network side, reducing data transmission latency, and improving system transmission performance.

In some embodiments, the terminal may receive a radio resource control (RRC) signal including the indication information transmitted by the base station; or receive system information including the indication information transmitted by the base station, where the system information may be SIB1 or SIBx, which is not limited in the present disclosure. Alternatively, the terminal can receive an MBS-MCCH including the indication information transmitted by the base station.

In the above embodiments, the terminal can receive the indication information transmitted by the base station through the above methods, thereby supporting multiple types of CPs on the same BWP, avoiding frequent switching of BWPs by the terminal, avoiding transmission latency caused by switching BWPs, and thus improving the system transmission performance.

In some embodiments, the indication information can be configured based on each specified BWP, or the indication information can be configured based on each cell.

The indication information is configured based on each cell, that is, in the case where the indication information is a cell specific configuration, the types of CPs corresponding to different resources indicated by the indication information can be applied to all specified BWPs within the cell.

In the above embodiments, the configuration of indication information can be based on each specified BWP or on each cell, which is easy to implement and has high availability.

The data transmission method provided in the embodiments of the present disclosure is introduced from the base station side below.

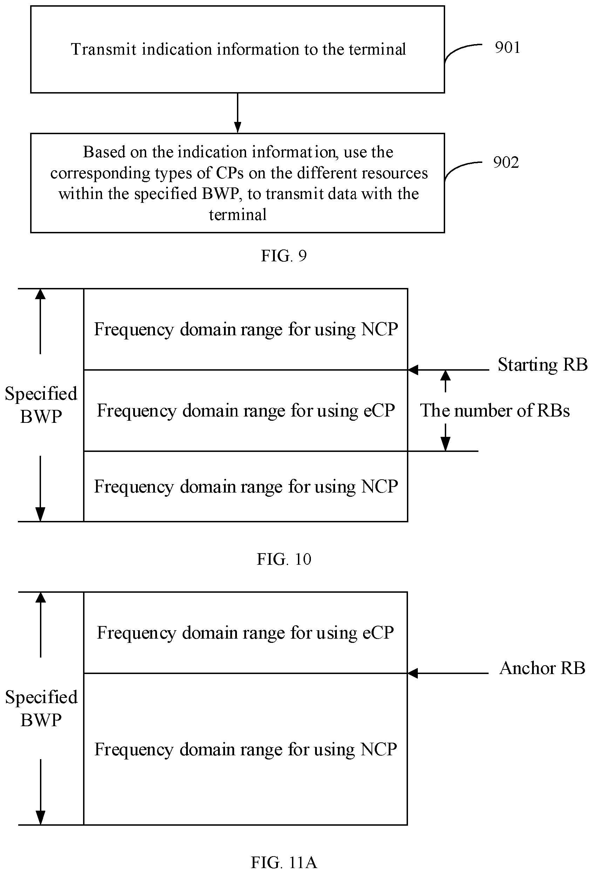

The embodiments of the present disclosure provide a data transmission method, as shown in FIG. 9. FIG. 9 is a flowchart of a data transmission method according to an embodiment. The method can be performed by a base station. The method may include the following steps 901 to 902.

In step 901, indication information is transmitted to the terminal.

In the embodiments of the present disclosure, the indication information is configured to configure the types of CPs corresponding to different resources within a specified BWP. The specified BWP can be a BWP that needs to support multiple types of CPs at the same time.

In an embodiment, multiple types of CPs include but are not limited to NCP and eCP, which is not limited in the present disclosure.

In step 902, based on the indication information, the corresponding types of CPs are used on the different resources within the specified BWP, to transmit data with the terminal.

In the above embodiments, the base station can configure the types of CPs corresponding to different resources within the specified BWP through indication information. Furthermore, the base station can use the corresponding types of CPs on the different resources within the specified BWP based on the indication information, to transmit data with the terminal, which improves system performance.

In some embodiments, the indication information transmitted by the base station can be used to configure the one or more types of one or more CPs corresponding to one or more specific frequency domain resources within the specified BWP. That is, a type of a CP is determined based on FDM within the specified BWP.

In an embodiment, the indication information is configured to configure a frequency domain resource range for using an extended cyclic prefix (eCP) within the specified BWP.

The specific content in the indication information, and the way in which the base station uses the corresponding types of CPs on different resources of the specified BWP to transmit data with the terminal based on the indication information, are similar to the implementation shown in FIG. 3 above, and will not be repeated here.

In an embodiment, the indication information can be used to configure an anchor RB corresponding to the eCP within a specified BWP.

The specific content in the indication information, and the way in which the base station uses the corresponding types of CPs on different resources of the specified BWP to transmit data with the terminal based on the indication information, are similar to the implementation shown in FIG. 4 above, and will not be repeated here.

In an embodiment, the indication information can be used to configure multiple CFRs using different types of CPs.

The way in which the base station uses the corresponding types of CPs on different resources of the specified BWP to transmit data with the terminal based on the indication information, are similar to the implementation shown in FIG. 5 above, and will not be repeated here.

In another embodiment, the indication information can be configured to configure types of CPs corresponding to different frequency domain resource granularities within the specified BWP.

The specific content in the indication information, and the way in which the base station uses the corresponding types of CPs on different resources of the specified BWP to transmit data with the terminal based on the indication information, are similar to the implementation shown in FIG. 6 above, and will not be repeated here.

In some embodiments, the indication information is configured to configure types of CPs corresponding to one or more specific time domain resources within the specified BWP. That is, a type of a CP is determined based on TDM within the specified BWP.

In an embodiment, the size of one or more specific time domain resources is measured in a unit of an OFDM symbol, a time slot, or a predefined time length. The predefined time length can be configured by the base station or agreed upon by the protocol, which is not limited in the present disclosure.

The specific content in the indication information, and the way in which the base station uses the corresponding types of CPs on different resources of the specified BWP to transmit data with the terminal based on the indication information, are similar to the implementation shown in FIG. 7 above, and will not be repeated here.

In an embodiment, the indication information can be configured using SII,V.

The specific content in the indication information, and the way in which the base station uses the corresponding types of CPs on different resources of the specified BWP to transmit data with the terminal based on the indication information, are similar to the implementation shown in FIG. 8 above, and will not be repeated here.

In an embodiment, when the size of the one or more specific time domain resources is measured in the unit of the time slot or the predefined time length, the indication information includes at least one of: period information; or CP type indication information corresponding to each of the one or more time domain resources within each period.

The base station can determine the CP indicated by the CP type indication information on each time domain resource based on the indication information, and then transmit data with the base station based on the CP.

In the above embodiments, the base station can configure the types of CPs corresponding to different resources within the specified BWP, where the specified BWP is a BWP that needs to support multiple types of CPs at the same time, which can reduce scheduling restrictions on the network side, reduce data transmission latency, and improve system transmission performance.

In some embodiments, the base station can transmit a radio resource control (RRC) signal including the indication information to the terminal; or transmit system information including the indication information to the terminal, where the system information may be SIB1 or SIBx, which is not limited in the present disclosure. Alternatively, the base station can transmit an MBS-MCCH including the indication information to the terminal.

In some embodiments, the indication information can be configured by the base station based on each specified BWP, or the indication information can be configured by the base station based on each cell.

The indication information is configured based on each cell, that is, in the case where the indication information is a cell specific configuration, the types of CPs corresponding to different resources indicated by the indication information can be applied to all specified BWPs within the cell.

For ease of understanding, further examples of the above data transmission methods are provided below.

In Embodiment 1, assuming that the terminal needs to support both NCP and eCP within the same frequency band at the same time. As an example, the terminal determines the specified BWP for the following reasons:

the terminal needs to transmit and receive a wide coverage service (such as a Rel-18 MBS) on the BWP, such that an eCP is required for reception; at the same time, the terminal needs to transmit and receive a legacy service (such as Rel-15/16/17 service) on the BWP, where the legacy (traditional) type service uses NCP for transmitting and receiving; and at the same time, the terminal needs to receive Rel-15/16/17 broadcast PDCCHs and PDSCHs on the BWP, where the broadcast channel performs transmission through NCP.

In the embodiments of the present disclosure, the base station configures multiple types of CPs for the specified BWP of the terminal through indication information. Specifically, the base station can transmit the RRC signal, SIB1, SIBx, or MBS-MCCH including indication information to the terminal. The indication information is at the BWP level or cell level, which is not limited in the present disclosure.

The terminal side receives the indication information transmitted by the network side and determines the corresponding types of CPs used on different frequency domain resources within the specified BWP. Specifically, the indication information transmitted by the base station is configured to configure a frequency domain resource range for using an extended cyclic prefix (eCP) within the specified BWP.

The indication information transmitted by the base station includes the Resource Block (RB) index of the starting Resource Block (RB) using the eCP within the specified BWP; and the number of RBs using eCP within the specified BWP. That is, the frequency domain range corresponding to the eCP is configured by SLIV.

Referring to FIG. 10, the terminal uses the eCP on the number of consecutive RBs starting from a starting RB within the specified BWP, to transmit data with the base station, and uses the NCP on other RBs within the specified BWP, to transmit data with the base station.

In Embodiment 2, it is assumed that the terminal needs to support both NCP and eCP within the same frequency band at the same time. As an example, the terminal determines the specified BWP for the following reasons:

the terminal needs to transmit and receive a wide coverage service (such as a Rel-18 MBS) on the BWP, such that an eCP is required for reception; at the same time, the terminal needs to transmit and receive a legacy service (such as Rel-15/16/17 service) on the BWP, where the legacy (traditional) type service uses NCP for transmitting and receiving; and at the same time, the terminal needs to receive Rel-15/16/17 broadcast PDCCHs and PDSCHs on the BWP, where the broadcast channel performs transmission through NCP.

In the embodiments of the present disclosure, the base station configures multiple types of CPs for the specified BWP of the terminal through indication information. Specifically, the base station can transmit the RRC signal, SIB1, SIBx, or MBS-MCCH including indication information to the terminal. The indication information is at the BWP level or cell level, which is not limited in the present disclosure.

The terminal side receives the indication information transmitted by the network side and determines the corresponding types of CPs used on different frequency domain resources within the specified BWP. Specifically, the RB index of the anchor RB corresponding to eCP within the BWP is configured in the indication information transmitted by the base station.

Referring to FIG. 11A, the terminal uses an eCP on RBs between the first RB and the anchor RB within the specified BWP, to transmit data with the base station, and uses an NCP on other RBs within the specified BWP, to transmit data with the base station.

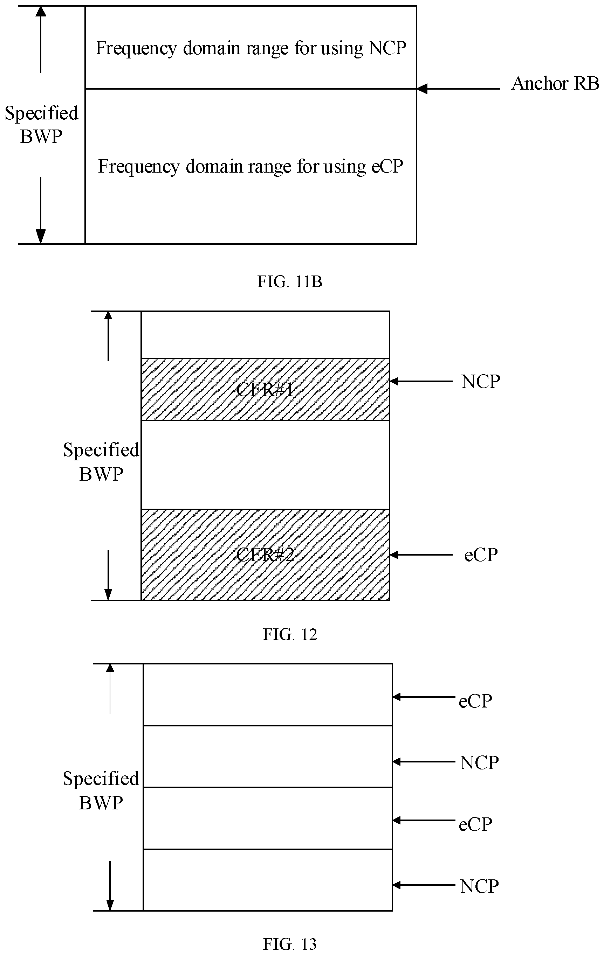

Alternatively, as shown in FIG. 11B, the terminal uses an eCP on the RBs between the anchor RB and the last RB within the specified BWP to transmit data with the base station, and uses an NCP on other RBs within the specified BWP to transmit data with the base station.

In Embodiment 3, it is assumed that the terminal needs to support both NCP and eCP within the same frequency band at the same time. As an example, the terminal determines the specified BWP for the following reasons:

the terminal needs to transmit and receive a wide coverage service (such as a Rel-18 MBS) on the BWP, such that an eCP is required for reception; at the same time, the terminal needs to transmit and receive a legacy service (such as Rel-15/16/17 service) on the BWP, where the legacy (traditional) type service uses NCP for transmitting and receiving; and at the same time, the terminal needs to receive Rel-15/16/17 broadcast PDCCHs and PDSCHs on the BWP, where the broadcast channel performs transmission through NCP.

In the embodiments of the present disclosure, the base station configures multiple types of CPs for the specified BWP of the terminal through indication information. Specifically, the base station can transmit the RRC signal, SIB1, SIBx, or MBS-MCCH including indication information to the terminal. The indication information is at the BWP level or cell level, which is not limited in the present disclosure.

The terminal side receives indication information transmitted by the network side, where the indication information is configured to configure multiple common frequency resources (CFRs) using different types of CPs. Specifically, the indication information includes but is not limited to at least one of the following: CFR configuring information; or CP type indication information corresponding to the CFRs.

It should be noted that, the CFR is used for transmission in multicast or broadcast related channels, such as for transmitting MBS services. The terminal uses CPs indicated by CP type indication information on different CFRs of the specified BWP, to transmit data with the base station.

Referring to FIG. 12, the base station configures CFR #1 and CFR #2 within a specified BWP for the terminal, where CFR #1 uses NCP for data transmission and CFR #2 uses eCP for data transmission.

It should be noted that the present disclosure does not limit the configuration of CFR.

In Embodiment 4, it is assumed that the terminal needs to support both NCP and eCP within the same frequency band at the same time. As an example, the terminal determines the specified BWP for the following reasons:
the terminal needs to transmit and receive a wide coverage service (such as a Rel-18 MBS) on the BWP, such that an eCP is required for reception; at the same time, the terminal needs to transmit and receive a legacy service (such as Rel-15/16/17 service) on the BWP, where the legacy (traditional) type service uses NCP for transmitting and receiving; and at the same time, the terminal needs to receive Rel-15/16/17 broadcast PDCCHs and PDSCHs on the BWP, where the broadcast channel performs transmission through NCP.

In the embodiments of the present disclosure, the base station configures multiple types of CPs for the specified BWP of the terminal through indication information. Specifically, the indication information is configured to configure types of CPs corresponding to different frequency domain resource granularities within the specified BWP. The indication information can be bitmap information.

When the bit value of a bit in the bitmap is 0, the CP type corresponding to the frequency domain resource granularity is NCP. When the bit value of a bit in the bitmap is 1, the CP type corresponding to the frequency domain resource granularity is eCP. The frequency domain resource granularity corresponding to each bit in the bitmap is 1 RB or N RBs, where N is a positive integer greater than 1. N RBs can be continuous RBs or discrete RBs. The value of N can be indicated through explicit signaling transmitted by the base station, or determined through pre-definition of a protocol.

Referring to FIG. 13, assuming that the length of the bitmap corresponding to the indication information is 4 bits, that is, the bitmap can indicate the types of CPs corresponding to four frequency domain resource granularities in a BWP, and assuming that the bitmap is 1010, the types of CPs corresponding to the first and third frequency domain resource granularities are eCP, and the types of CPs corresponding to the second and fourth frequency domain resource granularities are NCP.

In Embodiment 5, assuming that the terminal needs to support both NCP and eCP within the same frequency band at the same time. As an example, the terminal determines the specified BWP for the following reasons:
the terminal needs to transmit and receive a wide coverage service (such as a Rel-18 MBS) on the BWP, such that an eCP is required for reception; at the same time, the terminal needs to transmit and receive a legacy service (such as Rel-15/16/17 service) on the BWP, where the legacy (traditional) type service uses NCP for transmitting and receiving; and at the same time, the terminal needs to receive Rel-15/16/17 broadcast PDCCHs and PDSCHs on the BWP, where the broadcast channel performs transmission through NCP.

In the embodiments of the present disclosure, the base station configures multiple types of CPs for the specified BWP of the terminal through indication information. Specifically, the indication information is configured to configure a type of CP corresponding to one or more specific time domain resources within the specified BWP.

The indication information is configured to configure the type of CP corresponding to each time domain resource within the specified BWP. The one or more specific time domain resources is measured in a unit of an OFDM symbol, a time slot, or a predefined time length.

Assuming that each specific time domain resource is measured in a unit of an OFDM symbol, the indication information is bitmap information. When the bit value of a bit in the bitmap is 0, the CP type corresponding to the OFDM symbol is NCP. When the bit value of a bit in the bitmap is 1, the CP type corresponding to the OFDM symbol is eCP.

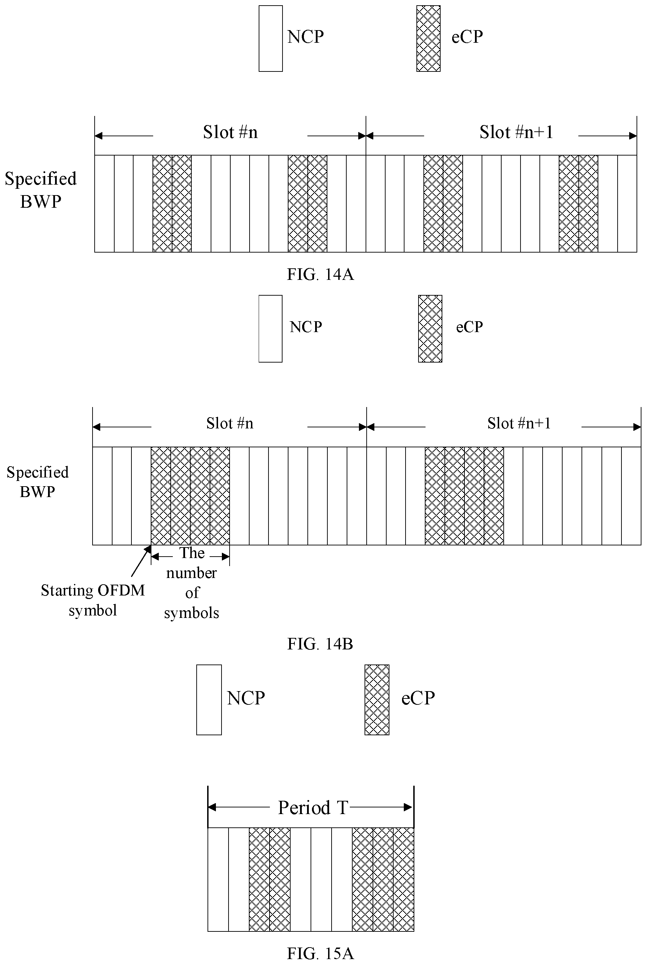

Assuming that the bitmap indicated by the base station is 00011000001100, the corresponding types of CPs used is shown in FIG. 14A.

Alternatively, the indication information includes at least one of: a time domain resource index of a starting time domain resource using an eCP within the specified BWP; or a number of time domain resources using an eCP within the specified BWP.

Assuming that the time domain resources are in units of OFDM symbols, the symbol index of the starting OFDM symbol is 3 and the number of symbols is 4. Referring to FIG. 14B, eCP is used on the OFDM symbols from OFDM symbol #3 to OFDM symbol #6 for data transmission with the base station, and NCP is used on other OFDM symbols for data transmission with the base station.

In Embodiment 6, as described in Embodiment 5, the terminal receives CP type indication information transmitted by the base station and determines the type of CP on one or more specific time domain resources of the specified BWP. Specifically, the indication information may include at least one of: period information; or CP type indication information corresponding to each of the one or more time domain resources within each period. Where the one or more specific time domain resources is measured in a unit of an OFDM symbol, a time slot, or a predefined time length.

The number of time domain resources included in the predefined time length can be indicated by any signaling as described in Embodiment 5.

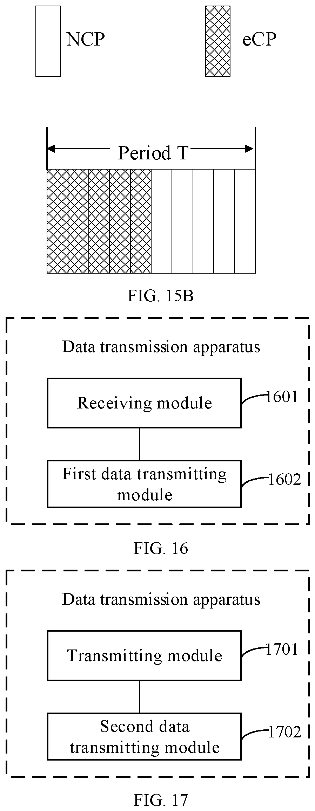

In the embodiments of the present disclosure, assuming that the indication information is configured to indicate the slot or time length using eCP, and the remaining slots or time lengths not indicated use NCP. Specifically, the base station indicates a period of a time domain pattern for the eCP and specifies the slot or time length using eCP in the period. The method for indicating the time domain resources occupied by eCP within one pattern period are shown in FIGs. 15A to 15B. FIGs. 15A to 15B respectively illustrate indication based on the bitmap within one period T and indication based on the SILV within one period T, which will not be repeated here.

In the above embodiments, the base station can configure multiple types of CPs for the specified BWP of the terminal, where the specified BWP is a BWP that needs to support multiple types of CPs at the same time. The terminal side can use multiple types of CPs for data transmission on the same BWP, avoiding frequent BWP switching by the terminal, reducing scheduling restrictions on the network side, reducing data transmission latency, and improving system transmission performance.

Corresponding to the above method embodiments implementing application functions, the present disclosure further provides embodiments of apparatuses for implementing application functions.

Referring to FIG. 16, FIG. 16 is a block diagram of a data transmission apparatus according to an embodiment. The apparatus is applied to a terminal and includes:

a receiving module 1601, configured to receive indication information transmitted by a base station, where the indication information is configured to configure types of cyclic prefixes (CPs) for different resources within a specified bandwidth part (BWP), and the specified BWP is a BWP that needs to support a plurality of types of CPs at a same time; and

a first data transmitting module 1602, configured to, based on the indication information, use the corresponding types of CPs on the different resources within the specified BWP, to transmit data with the base station.

Referring to FIG. 17, FIG. 17 is a block diagram of a data transmission apparatus according to an embodiment. The apparatus is applied to a base station and includes:

a transmitting module 1701, configured to transmit indication information to a terminal, where the indication information is configured to configure types of cyclic prefixes (CPs) for different resources within a specified bandwidth part (BWP), and the specified BWP is a BWP that needs to support a plurality of types of CPs at a same time; and

a second data transmitting module 1702, configured to, based on the indication information, use the corresponding types of CPs on the different resources within the specified BWP, to transmit data with the terminal.

Since the device embodiments basically corresponds to the method embodiments, the relevant parts can refer to the partial description of the method embodiments. The apparatus examples described above are merely illustrative, where the units described as separate components may or may not be physically separated, and the components displayed as units may or may not be physical units, i.e., may be located in one place or may be distributed to multiple network units. Some or all of the modules can be selected according to the actual needs to achieve the purpose of the technical solutions of the present disclosure. A person skilled in the art can understand and implement without creative work.

Correspondingly, in the present disclosure, a computer-readable storage medium is further provided, which stores a computer program for executing any one of the data transmission methods performed by the terminal side described above.

Correspondingly, in the present disclosure, a computer-readable storage medium is further provided, which stores a computer program for executing any one of the data transmission methods performed by the base station side described above.

Correspondingly, in the present disclosure, a data transmission device is further provided, and includes:

one or more processors; and
one or more memories storing instructions executable by the one or more processors;
where the one or more processors are configured to perform any one of the above data transmission methods at the terminal side.

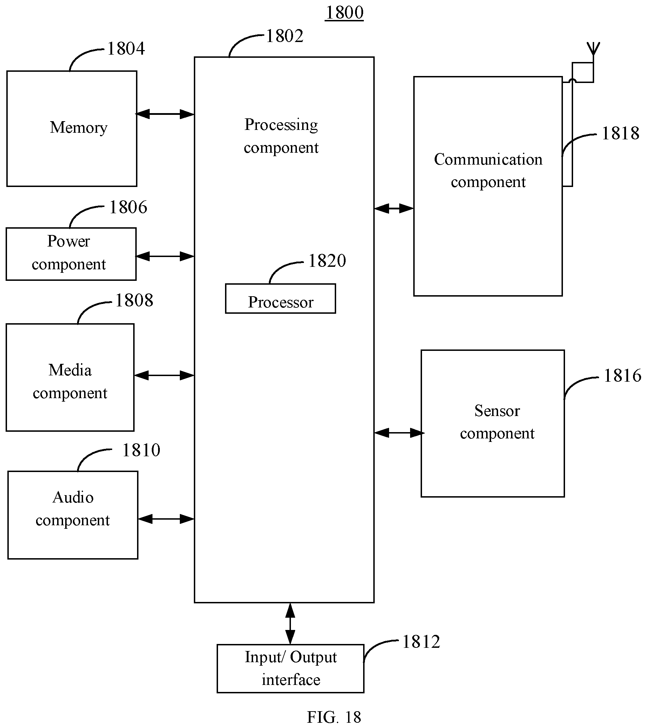

FIG. 18 is a schematic structural diagram illustrating an electronic device 1800 according to an example of the present disclosure. For example, the electronic device 1800 may be a mobile phone, a tablet computer, an e-book reader, a multimedia player, a wearable device, a vehicle-mounted terminal, ipad, smart television, or other terminal.

Referring to FIG. 18, the electronic device 1800 may include one or more of the following components: a processing component 1802, a memory 1804, a power component 1806, a multimedia component 1808, an audio component 1810, an input/output (I/O) interface 1812, a sensor component 1816, and a communication component 1818.

The processing component 1802 generally controls the overall operation of the electronic device 1800, such as operations associated with displays, phone calls, data communications, camera operations, and recording operations. The processing component 1802 may include one or more processors 1820 to execute instructions to complete all or a part of the steps of the above data transmission methods. Further, the processing component 1802 may include one or more modules to facilitate interaction between the processing component 1802 and another component. For example, the processing component 1802 may include a multimedia module to facilitate the interaction between the multimedia component 1808 and the processing component 1802. For another example, the processing component 1802 may read executable instructions from the memory to perform steps in the data transmission method provided in embodiments as described above.

The memory 1804 is configured to store different types of data to support operation at the electronic device 1800. Examples of such data include instructions, contact data, phonebook data, messages, pictures, videos, and so on for any application or method that operates on the electronic device 1800. The memory 1804 may be implemented by any type of volatile or non-volatile storage devices or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, a disk or a CD.

The power source assembly 1806 provides power to different assemblies of the electronic device 1800. The power source assembly 1806 may include a power source management system, one or more power sources and other assemblies associated with generating, managing and distributing power for the electronic device 1800.

The multimedia component 1808 includes a display screen that provides an output interface between the electronic device 1800 and a user. In some examples, the multimedia component 1808 may include a front camera and/or a rear camera. When the electronic device 1800 is in an operating mode, such as in a shooting mode or a video mode, the front camera and/or the rear camera may receive external multimedia data. Each of the front camera and the rear camera may be a fixed optical lens system or be of a focal length and a capability of an optical zoom.

The audio component 1810 is configured to output and/or input an audio signaling. For example, the audio assembly 1810 includes a microphone (MIC). When the electronic device 1800 is in an operating mode, for example, in a call mode, a recording mode or a speech recognition mode, the microphone is configured to receive an external audio signal. The received audio signaling may be further stored in the memory 1804 or transmitted via the communication component 1818. In some examples, the audio component 1810 also includes a loudspeaker for outputting an audio signaling.

The I/O interface 1812 may provide an interface between the processing component 1802 and peripheral interface modules. The above peripheral interface modules may include a keyboard, a click wheel, buttons and so on. These buttons may include but not limited to, a home button, a volume button, a start button and a lock button.

The sensor assembly 1816 includes one or more sensors for evaluating states of the electronic device 1800 in different aspects. For example, the sensor component 1816 may detect the on/off status of the electronic device 1800, and relative positioning of component, for example, the component is a display and a keypad of the electronic device 1800. The sensor component 1816 may also detect a change in position of the electronic device 1800 or a component of the electronic device 1800, a presence or absence of the contact between a user and the electronic device 1800, an orientation or an acceleration/deceleration of the electronic device 1800, and a change in temperature of the electronic device 1800. The sensor component 1816 may include a proximity sensor for detecting the existence of a nearby object without any physical touch. The sensor component 1816 may also include an optical sensor, such as a CMOS or CCD image sensor used in an imaging application. In some examples, the sensor component 1816 may also include an acceleration sensor, a gyro sensor, a magnetic sensor, a pressure sensor, or a temperature sensor.

The communication assembly 1818 is configured to facilitate wired or wireless communication between the electronic device 1800 and other devices. The electronic device 1800 may access a wireless network based on a communication standard, such as Wi-Fi, 2G, 3G, 4G, 5G, 6G, or a combination thereof. In some embodiments, the communication component 1818 may receive a broadcast signaling or broadcast-related information from an external broadcast management system via a broadcast channel. In an example, the communication component 1818 may also include a Near Field Communication (NFC) module to facilitate short-range communications. For example, the NFC module may be implemented based on a Radio Frequency Identification (RFID) technology, an Infrared Data Association (IrDA) technology, an Ultra Wideband (UWB) technology, a Bluetooth® (BT) technology and other technologies.

In some illustrative embodiments, the electronic device 1800 may be implemented by one or more of an application -specific integrated circuit (ASIC), a digital signal processor (DSP), a digital signal processing device (DSPD), programmable logical device (PLD), field programmable gate array (FPGA), a controller, microcontroller, a microprocessor or other electronic components to execute the above data transmission methods.

In an example embodiment, there is also provided a non-transitory machine-readable storage medium including instructions, such as a memory 1804 including instructions, where the instructions are executable by the processor 1820 of the electronic device 1800 to implement the data transmission method as described above. For example, the non-transitory computer-readable storage medium may be a ROM, a RAM, a CD-ROM, a magnetic tape, a floppy disc, an optical data storage device, and the like.

Correspondingly, in the present disclosure, a data transmission device is further provided, and includes:

one or more processors; and
one or more memories storing instructions executable by the one or more processors;
where the one or more processors are configured to perform any one of the above data transmission methods at the base station side.

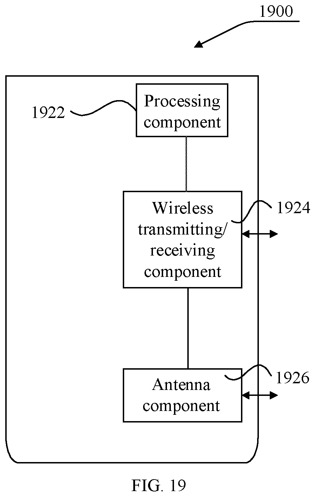

As shown in FIG. 19, FIG. 19 is a schematic structural diagram of a data transmission apparatus 1900 according to an embodiment. The apparatus 1900 may be provided as a base station. Referring to FIG. 19, the device 1900 includes a processing component 1922, a wireless transmitting/receiving component 1924, an antenna component 1926, and a signaling processing portion specific to a wireless interface. The processing component 1922 may further include at least one processors.

One of the processors in the processing component 1922 may be configured to execute any one of the foregoing data transmission method.

Other implementations of the present disclosure will be apparent to those skilled in the art from consideration of the specification and practice of the present disclosure herein. The present application is intended to cover any variations, uses, or adaptations of the present disclosure, which follow the general principle of the present disclosure and include common knowledge or conventional technical means in the art that are not disclosed in the present disclosure. The specification and embodiments herein are intended to be illustrative only and the real scope and spirit of the present disclosure are indicated by the following claims of the present disclosure.

It is to be understood that the present disclosure is not limited to the precise structures described above and shown in the accompanying drawings and may be modified or changed without departing from the scope of the present disclosure. The scope of protection of the present disclosure is limited only by the appended claims.

**Claims**

1. A data transmission method, performed by a terminal, comprising:

receiving indication information transmitted by a base station, wherein the indication information is configured to configure types of cyclic prefixes (CPs) for different resources within a specified bandwidth part (BWP), and the specified BWP is a BWP that needs to support a plurality of types of CPs at a same time; and
based on the indication information, using the corresponding types of CPs on the different resources within the specified BWP, to transmit data with the base station.

2. The method according to claim 1, wherein the indication information is configured to configure types of CPs corresponding to one or more specific frequency domain resources within the specified BWP.

3. The method according to claim 2, wherein the indication information is configured to configure a frequency domain resource range for using an extended cyclic prefix (eCP) within the specified BWP.

4. The method according to claim 3, wherein the indication information comprises at least one of:

an RB index of a starting resource block (RB) using the eCP within the specified BWP; or
a number of RBs using the eCP within the specified BWP; and
the based on the indication information, using the corresponding types of the CPs on the different resources within the specified BWP, to transmit data with the base station comprises at least one of:

using the eCP on the number of consecutive RBs starting from the starting RB within the specified BWP, to transmit data with the base station; or
using a normal cyclic prefix (NCP) on other RBs within the specified BWP, to transmit data with the base station.

5. The method according to claim 2, wherein the indication information is configured to configure an anchor RB corresponding to an eCP within the specified BWP.

6. The method according to claim 5, wherein the indication information comprises an RB index of the anchor RB; the based on the indication information, using the corresponding types of the CPs on the different resources within the specified BWP, to transmit data with the base station comprises at least one of:

   using an eCP on RBs between a preset RB and the anchor RB within the specified BWP, to transmit data with the base station; or
   using an NCP on other RBs within the specified BWP, to transmit data with the base station.

7. The method according to claim 6, wherein the preset RB is a first RB or a last RB on the specified BWP.

8. The method according to claim 2, wherein the indication information is configured to configure a plurality of common frequency resources (CFRs) using different types of CPs.

9. The method according to claim 8, wherein the indication information comprises at least one of:

   CFR configuring information; or
   CP type indication information corresponding to the plurality of CFRs; and
   the based on the indication information, using the corresponding types of CPs on the different resources within the specified BWP, to transmit data with the base station comprises:
   using CPs indicated by CP type indication information on different CFRs of the specified BWP, to transmit data with the base station.

10. The method according to claim 2, wherein the indication information is configured to configure types of CPs corresponding to different frequency domain resource granularities within the specified BWP.

11. The method according to claim 10, wherein the indication information comprises bitmap information; the based on the indication information, using the corresponding types of the CPs on the different resources within the specified BWP, to transmit data with the base station comprises at least one of:

   using an eCP on a frequency domain resource granularity corresponding to a first bit value within the specified BWP, to transmit data with the base station; or
   using an NCP on a frequency domain resource granularity corresponding to a second bit value within the specified BWP, to transmit data with the base station.

12. The method according to claim 10, wherein each of the frequency domain resource granularities comprises one or more RBs, wherein the RBs are continuous RBs or discrete RBs.

13. The method according to claim 10, further comprising:

   based on a protocol convention, determining one or more RBs in each of the frequency domain resource granularities; or
   based on a specified signaling transmitted by the base station, determining one or more RBs in each of the frequency domain resource granularities.

14. The method according to claim 1, wherein the indication information is configured to configure types of CPs corresponding to one or more specific time domain resources within the specified BWP, wherein a size of one or more specific time domain resources is in a unit of an orthogonal frequency division multiplexing (OFDM) symbol, a time slot, or a predefined time length.

15. The method according to claim 14, wherein the indication information comprises bitmap information; the based on the indication information, using the corresponding types of the CPs on the different resources within the specified BWP, to transmit data with the base station comprises at least one of:

   using an eCP on a time domain resource corresponding to a first bit value within the specified BWP, to transmit data with the base station; or

using an NCP on a time domain resource corresponding to a second bit value within the specified BWP, to transmit data with the base station.

16. The method according to claim 14, wherein the indication information comprises at least one of:

a time domain resource index of a starting time domain resource using an eCP within the specified BWP; or
a number of time domain resources using an eCP within the specified BWP;
the based on the indication information, using the corresponding types of the CPs on the different resources within the specified BWP, to transmit data with the base station comprises at least one of:

using the eCP on the number of consecutive time domain resources starting from the starting time domain resource within the specified BWP, to transmit data with the base station; or
using an NCP on other time domain resources within the specified BWP, to transmit data with the base station.

17. The method according to claim 14, wherein when the size of the one or more specific time domain resources is in the unit of the time slot or the predefined time length, the indication information comprises at least one of:

period information; or
CP type indication information corresponding to each of the one or more time domain resources within each period.

18. The method according to any one of claims 1-17, wherein the receiving the indication information transmitted by the base station comprises:

receiving a radio resource control (RRC) signal comprising the indication information transmitted by the base station; or
receiving system information comprising the indication information transmitted by the base station; or
receiving a multicast broadcast service multicast control channel (MBS-MCCH) comprising the indication information transmitted by the base station.

19. The method according to any one of claims 1-17, wherein the indication information is configured based on each specified BWP, or the indication information is configured based on each cell.

20. A data transmission method, performed by a base station, comprising:

transmitting indication information to a terminal, wherein the indication information is configured to configure types of cyclic prefixes (CPs) for different resources within a specified bandwidth part (BWP), and the specified BWP is a BWP that needs to support a plurality of types of CPs at a same time; and
based on the indication information, using the corresponding types of CPs on the different resources within the specified BWP, to transmit data with the terminal.

21. The method according to claim 20, wherein the indication information is configured to configure types of CPs corresponding to one or more specific frequency domain resources within the specified BWP.

22. The method according to claim 21, wherein the indication information is configured to configure a frequency domain resource range for using an extended cyclic prefix (eCP) within the specified BWP.

23. The method according to claim 22, wherein the indication information comprises at least one of:

an RB index of a starting resource block (RB) using the eCP within the specified BWP; or
a number of RBs using the eCP within the specified BWP; and
the based on the indication information, using the corresponding types of the CPs on the different resources within the specified BWP, to transmit data with the terminal comprises at least one of:

using the eCP on the number of consecutive RBs consecutive starting from the starting RB within the specified BWP, to transmit data with the terminal; or
using a normal cyclic prefix (NCP) on other RBs within the specified BWP, to transmit data with the terminal.

24. The method according to claim 21, wherein the indication information is configured to configure an anchor RB corresponding to an eCP within the specified BWP.

25. The method according to claim 24, wherein the indication information comprises an RB index of the anchor RB; the based on the indication information, using the corresponding types of the CPs on the different resources within the specified BWP, to transmit data with the terminal comprises at least one of:

    using an eCP on RBs between a preset RB and the anchor RB within the specified BWP, to transmit data with the terminal; or
    using an NCP on other RBs within the specified BWP, to transmit data with the terminal.

26. The method according to claim 21, wherein the indication information is configured to configure a plurality of common frequency resources (CFRs) using different types of CPs.

27. The method according to claim 26, wherein the indication information comprises at least one of:

    CFR configuring information; or
    CP type indication information corresponding to the plurality of CFRs; and
    the based on the indication information, using the corresponding types of CPs on the different resources within the specified BWP, to transmit data with the terminal comprises:
    using CPs indicated by CP type indication information on different CFRs of the specified BWP, to transmit data with the terminal.

28. The method according to claim 21, wherein the indication information is configured to configure types of CPs corresponding to different frequency domain resource granularities within the specified BWP.

29. The method according to claim 28, wherein the indication information comprises bitmap information; the based on the indication information, using the corresponding types of the CPs on the different resources within the specified BWP, to transmit data with the terminal comprises at least one of:

    using an eCP on a frequency domain resource granularity corresponding to a first bit value within the specified BWP, to transmit data with the terminal; or
    using an NCP on a frequency domain resource granularity corresponding to a second bit value within the specified BWP, to transmit data with the terminal.

30. The method according to claim 28, wherein each of the frequency domain resource granularities comprises one or more RBs, wherein the RBs are continuous RBs or discrete RBs.

31. The method according to claim 28, further comprising:
    transmitting specified signaling to the terminal for configuring one or more RBs contained in each of the frequency domain resource granularities.

32. The method according to claim 20, wherein the indication information is configured to configure types of CPs corresponding to one or more specific time domain resources within the specified BWP, wherein a size of one or more specific time domain resources is measured in a unit of an orthogonal frequency division multiplexing (OFDM) symbol, a time slot, or a predefined time length.

33. The method according to claim 32, wherein the indication information comprises bit map information; the based on the indication information, using the corresponding types of the CPs on the different resources within the specified BWP, to transmit data with the terminal comprises at least one of:

    using an eCP on a time domain resource corresponding to a first bit value within the specified BWP, to transmit data with the terminal; or
    using an NCP on a time domain resource corresponding to a second bit value within the specified BWP, to transmit data with the terminal.

34. The method according to claim 32, wherein the indication information comprises at least one of:

a time domain resource index of a starting time domain resource using an eCP within the specified BWP; or

a number of time domain resources using an eCP within the specified BWP;

the based on the indication information, using the corresponding types of the CPs on the different resources within the specified BWP, to transmit data with the terminal comprises at least one of:

using the eCP on the number of consecutive time domain resources starting from the starting time domain resource within the specified BWP, to transmit data with the terminal; or

using an NCP on other time domain resources within the specified BWP, to transmit data with the terminal.

35. The method according to claim 32, wherein when the size of the one or more specific time domain resources is in the unit of the time slot or the predefined time length, the indication information comprises at least one of:

period information; or

CP type indication information corresponding to each of the one or more time domain resources within each period.

36. The method according to any one of claims 20-35, wherein the transmitting the indication information to the terminal comprises:

transmitting a radio resource control (RRC) signal comprising the indication information to the terminal; or

transmitting system information comprising the indication information to the terminal; or

transmitting a multicast broadcast service multicast control channel (MBS-MCCH) comprising the indication information to the terminal.

37. The method according to any one of claims 20-35, wherein the indication information is configured based on each specified BWP, or the indication information is configured based on each cell.

38. A data transmission apparatus, applied to a terminal, comprising:

a receiving module, configured to receive indication information transmitted by a base station, wherein the indication information is configured to configure types of cyclic prefixes (CPs) for different resources within a specified bandwidth part (BWP), and the specified BWP is a BWP that needs to support a plurality of types of CPs at a same time; and

a first data transmitting module, configured to, based on the indication information, use the corresponding types of CPs on the different resources within the specified BWP, to transmit data with the base station.

39. A data transmission apparatus, applied to a base station, comprising:

a transmitting module, configured to transmit indication information to a terminal, wherein the indication information is configured to configure types of cyclic prefixes (CPs) for different resources within a specified bandwidth part (BWP), and the specified BWP is a BWP that needs to support a plurality of types of CPs at a same time; and

a second data transmitting module, configured to, based on the indication information, use the corresponding types of CPs on the different resources within the specified BWP, to transmit data with the terminal.

40. A computer-readable storage medium storing a computer program, wherein the computer program is configured to execute the data transmission method according to any one of claims 1 to 19.

41. A computer-readable storage medium storing a computer program, wherein the computer program is configured to execute the data transmission method according to any one of claims 20 to 37.

42. A data transmission device, comprising:

one or more processors; and

one or more memories storing instructions executable by the one or more processors;

wherein the one or more processors are configured to perform the data transmission method according to any one of claims 1 to 19.

43. A data transmission device, comprising:

one or more processors; and
one or more memories storing instructions executable by the one or more processors;
wherein the one or more processors are configured to perform the data transmission method according to any one of claims 20 to 37.

FIG. 1

FIG. 2

Receive indication information transmitted by a base station — 301

Use the eCP the number of consecutive RBs starting from a starting RB within the specified BWP, to transmit data with the base station; and use the NCP on other RBs within the specified BWP, to transmit data with the base station — 302

FIG. 3

Receive indication information transmitted by a base station — 401

Use an eCP on RBs between a preset RB and the anchor RB within the specified BWP, to transmit data with the base station; and use an NCP on other RBs within the specified BWP, to transmit data with the base station — 402

FIG. 4

Receive indication information transmitted by a base station — 501

Use CPs indicated by CP type indication information on different CFRs of the specified BWP, to transmit data with the base station — 502

FIG. 5

Receive indication information transmitted by a base station — 601

Use one or more eCPs on a frequency domain resource granularity corresponding to a first bit value within the specified BWP, to transmit data with the base station; and use one or more NCPs on a frequency domain resource granularity corresponding to a second bit value within the specified BWP, to transmit data with the base station. — 602

FIG. 6

Receive indication information transmitted by a base station — 701

Use an eCP on a time domain resource corresponding to a first bit value within the specified BWP, to transmit data with the base station; and use an NCP on a time domain resource corresponding to a second bit value within the specified BWP, to transmit data with the base station — 702

FIG. 7

Receive indication information transmitted by a base station — 801

Use the eCP on the number of consecutive time domain resources starting from a starting time domain resource within the specified BWP, to transmit data with the base station; and use an NCP is used on other time domain resources within the specified BWP, to transmit data with the base station — 802

FIG. 8

| |
|---|
| Transmit indication information to the terminal |

— 901

| |
|---|
| Based on the indication information, use the corresponding types of CPs on the different resources within the specified BWP, to transmit data with the terminal |

— 902

FIG. 9

| Specified BWP | Frequency domain range for using NCP |
|---|---|
| | Frequency domain range for using eCP |
| | Frequency domain range for using NCP |

Starting RB

The number of RBs

FIG. 10

| Specified BWP | Frequency domain range for using eCP |
|---|---|
| | Frequency domain range for using NCP |

Anchor RB

FIG. 11A

Specified BWP

Frequency domain range for using NCP

Anchor RB

Frequency domain range for using eCP

FIG. 11B

Specified BWP

CFR#1 — NCP

CFR#2 — eCP

FIG. 12

Specified BWP

eCP

NCP

eCP

NCP

FIG. 13

NCP     eCP

Slot #n     Slot #n+1

Specified
BWP

FIG. 14A

NCP     eCP

Slot #n     Slot #n+1

Specified
BWP

Starting OFDM
symbol

← The →
number
of
symbols

FIG. 14B

NCP     eCP

Period T

FIG. 15A

NCP     eCP

Period T

FIG. 15B

Data transmission apparatus

| Receiving module | 1601 |

| First data transmitting module | 1602 |

FIG. 16

Data transmission apparatus

| Transmitting module | 1701 |

| Second data transmitting module | 1702 |

FIG. 17

<u>1800</u>

1804

1802

Memory

Processing
component

1818

Communication
component

1806

Power
component

1820

Processor

1808

Media
component

1810

1816

Sensor
component

Audio
component

1812

Input/ Output
interface

FIG. 18

1900

```
                    ┌─────────────┐
              1922  │ Processing  │
              ⟋     │ component   │
                    └──────┬──────┘
                           │
                    ┌──────┴──────┐
                    │  Wireless   │ ⟋ 1924
                    │ transmitting/│ ←→
                    │  receiving  │
                    │  component  │
                    └──────┬──────┘
                           │
                    ┌──────┴──────┐
                    │   Antenna   │ ⟋ 1926
                    │  component  │ ←→
                    └─────────────┘
```

FIG. 19

**INTERNATIONAL SEARCH REPORT**

| International application No. |
|---|
| **PCT/CN2022/076886** |

**A. CLASSIFICATION OF SUBJECT MATTER**

H04W 72/04(2009.01)i; H04W 24/02(2009.01)i

According to International Patent Classification (IPC) or to both national classification and IPC

**B. FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI; 3GPP: 带宽部分, 部分带宽, BWP, 相同, 同一, 循环前缀, CP, 扩展, 拓展, eCP, 普通, 常规, NCP, 类型, 避免, 无需, 切换, bandwidth part, same, cyclic prefix, extended, normal, type, avoid, switch

**C. DOCUMENTS CONSIDERED TO BE RELEVANT**

| Category* | Citation of document, with indication, where appropriate, of the relevant passages | Relevant to claim No. |
|---|---|---|
| A | CN 110731113 A (BEIJING XIAOMI MOBILE SOFTWARE CO., LTD.) 24 January 2020 (2020-01-24)<br>description, paragraphs [0108]-[0297] | 1-43 |
| A | CN 109151846 A (HUAWEI TECHNOLOGIES CO., LTD.) 04 January 2019 (2019-01-04)<br>entire document | 1-43 |
| A | CN 108476520 A (BEIJING XIAOMI MOBILE SOFTWARE CO., LTD.) 31 August 2018 (2018-08-31)<br>entire document | 1-43 |
| A | CN 109788563 A (VIVO COMMUNICATION TECHNOLOGY CO., LTD.) 21 May 2019 (2019-05-21)<br>entire document | 1-43 |
| A | US 2021211241 A1 (INTEL CORP.) 08 July 2021 (2021-07-08)<br>entire document | 1-43 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **21 September 2022** | **12 October 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/076886**

| Patent document cited in search report | | | Publication date (day/month/year) | Patent family member(s) | Publication date (day/month/year) |
|---|---|---|---|---|---|
| CN | 110731113 | A | 24 January 2020 | None | |
| CN | 109151846 | A | 04 January 2019 | None | |
| CN | 108476520 | A | 31 August 2018 | None | |
| CN | 109788563 | A | 21 May 2019 | None | |
| US | 2021211241 | A1 | 08 July 2021 | None | |

Form PCT/ISA/210 (patent family annex) (January 2015)